# EUROPEAN PATENT APPLICATION

(11) **EP 4 667 794 A1**
(43) Date of publication of application: **24.12.2025**
(21) Application number: 25177509.4
(22) Date of filing: 20.05.2025
(51) Int. Cl.: F16K 15/02, F16K 17/30, F16K 17/34, G05D 7/01, F15B 13/02

(54) **PRESSURE RELIEF VALVE**

(30) Priority: 17.06.2024 GB 202408662
(71) Applicant: Rolls-Royce plc, London N1 9FX (GB)
(72) Inventor: Smith, Michael R, Derby, DE24 8BJ (GB)
(74) Representative: Rolls-Royce plc

(57) **Abstract**

This disclosure relates to a pressure relief valve for a gaseous fuel such as hydrogen. Example embodiments include a pressure relief device (100) for a gaseous fuel, the device (100) comprising: a cylinder (101) having a fuel inlet (102a, 102b) in a wall (103) of the cylinder (101), an outlet (104) at an open first end (105) of the cylinder (101) and an end wall (106) at a closed opposing second end (107) of the cylinder (101); a piston (108) disposed within the cylinder (101), the piston (108) having a first end (109) adjacent the outlet (104) of the cylinder (101) defining an outlet orifice (110) and a second opposing end (111) slidably mounted within the cylinder (101) between first and second end stops (112a, 112b); and a spring (113) mounted between the second end (111) of the piston (108) and the end wall (106) of the cylinder (101), the spring (113) arranged to bias the second end (111) of the piston (108) towards the second end stop (112b), wherein movement of the piston (108) along a longitudinal axis (114) of the cylinder (101) between the first and second end stops (112a, 112b) varies a size of the outlet orifice (110) to thereby vary a flow of gaseous fuel between the fuel inlet (102a, 102b) and the outlet orifice (110)

## Description

### CROSS REFERENCE TO RELATED APPLICATIONS

This represents the first application directed towards the subject-matter.

### FIELD

This disclosure relates to a pressure relief valve for a gaseous fuel such as hydrogen.

### BACKGROUND

When dealing with any fuel in a storage tank, the possibility of the tank pressure exceeding maximum requirements must be considered. For storage of hydrogen, such requirements are particularly important due to the possibility of explosive release. Conditions where pressure relief may be required include when the tank is exposed to elevated temperatures, for example if affected by fire. A hydrogen storage tank may comprise a device known as a Thermal Pressure Relief Device (TPRD), which comprises a thermally activated 'fuse' arranged to activate when a defined thermal threshold is breached. An orifice is provided downstream of the TPRD to regulate the flow of gas out of the tank for release into the external environment. The orifice needs to be sized to control the expected hydrogen flow rate. The orifice needs to be large enough to ensure that the hydrogen can combust while being exhausted. If the orifice is too small, any flame will blow out, potentially leading to a more dangerous accumulation of hydrogen gas in the local environment. If, however, the orifice is too large, the potential flame can be hazardously large. The orifice needs, however, to be large enough so that the tank can blowdown at a rate such that its ultimate pressure capability is not exceeded.

Various alternative orifice designs are known that may help to mitigate some of the above effects, but typical designs aim to satisfy the above conditions with a fixed orifice, which leads to limitations around control of mass flow. The mass flow limitations will usually mean that, to achieve control over an initial flame length, the tank blowdown time is lengthened. As the pressure drops in the tank, the mass flow rate through the orifice falls and the tank emptying time increases.

### SUMMARY

According to a first aspect there is provided a pressure relief device for a gaseous fuel, the device comprising:
a cylinder having a fuel inlet in a wall of the cylinder, an outlet at an open first end of the cylinder and an end wall at a closed opposing second end of the cylinder;
a piston disposed within the cylinder, the piston having a first end adjacent the outlet of the cylinder defining an outlet orifice and a second opposing end slidably mounted within the cylinder between first and second end stops; and
a spring mounted between the second end of the piston and the end wall of the cylinder, the spring arranged to bias the second end of the piston towards the second end stop,
wherein movement of the piston along a longitudinal axis of the cylinder between the first and second end stops varies a size of the outlet orifice to thereby vary a flow of gaseous fuel between the fuel inlet and the outlet orifice.

The outlet orifice may be in the form of a circular gap between the first end of the piston and the first end of the cylinder.

The outlet orifice may be in the form of one or more holes through the wall of the cylinder, the first end of the piston being slidably mounted within the cylinder such that movement of the second end of the piston along the longitudinal axis of the cylinder from the first to second end stops uncovers the one or more holes to vary the size of the outlet orifice.

The outlet orifice may be larger when the second end of the piston is against the second end stop compared to when the second end of the piston is against the first end stop.

The first end stop may be provided by a protrusion on an inner face of the cylinder.

The cylinder may comprise a first portion having a first internal diameter and a second portion having a second internal diameter larger than the first internal diameter, the second end of the piston being disposed within the second portion of the cylinder.

The second internal diameter may be between around 2 and 3 times the first internal diameter.

The second end stop may be provided by a radial transition between the first and second portions of the cylinder.

The pressure relief device may further comprise a sealing ring extending around an outer edge of the second end of the piston between the outer edge of the second end of the piston and an inner surface of the cylinder.

The second end of the cylinder may comprise one or more ports extending through the second end.

According to a second aspect there is provided a fuel storage system comprising:
a storage tank;
a pressure relief device according to the first aspect, wherein the fuel inlet is connected to the storage tank by a pressure relief line; and
a thermal pressure relief device in the pressure relief line between the pressure relief device and the storage tank and configured to open when a predetermined temperature threshold is exceeded.

The storage tank may be configured to store hydrogen.

According to a third aspect there is provided a method of exhausting fuel in a fuel storage system according to the second aspect, the method comprising:
opening the thermal pressure relief device when the predetermined temperature threshold is exceeded; and
exhausting the fuel from the storage tank as gas through the pressure relief valve,
wherein the outlet orifice of the pressure relief valve increases in size as a pressure of the gas in the pressure relief line reduces as the fuel is exhausted from the storage tank.

The fuel in the storage tank may be hydrogen.

### BRIEF DESCRIPTION OF THE DRAWINGS

Embodiments will now be described by way of example only with reference to the accompanying drawings, in which:
FIG. 1 is a schematic sectional drawing of an example pressure relief device in a first configuration;
FIG. 2 is a schematic sectional drawing of the example pressure relief device of FIG. 1 in a second configuration;
FIG. 3 is a schematic drawing illustrating a hydrogen storage system comprising a storage tank connected to a pressure relief device;
FIG. 4 is a schematic sectional drawing of an alternative example pressure relief device; and
FIG. 5 is a flow diagram illustrating an example method of exhausting fuel in a fuel storage system.

### DETAILED DESCRIPTION

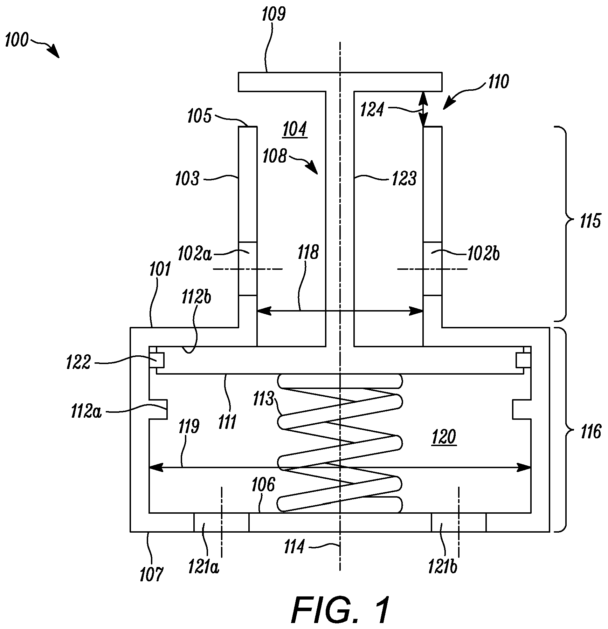

Figure 1 is a schematic sectional drawing of an example pressure relief device 100 for a gaseous fuel. The device comprises a piston 108 slidably mounted within a cylinder 101, in which movement of the piston 108 within the cylinder 101 is controlled by a spring 113 and a pressure differential across the piston 108, as described in more detail below. The cylinder 101 has one or more fuel inlets 102a, 102b extending through a wall 103 of the cylinder 101 to admit gaseous fuel from a storage tank. The inlets 102a, 102b are sized to provide a small pressure drop across the cylinder wall 103. The cylinder 101 comprises an outlet 104 at an open first end 105 of the cylinder 101 and a closed opposing second end 107 having an end wall 106.

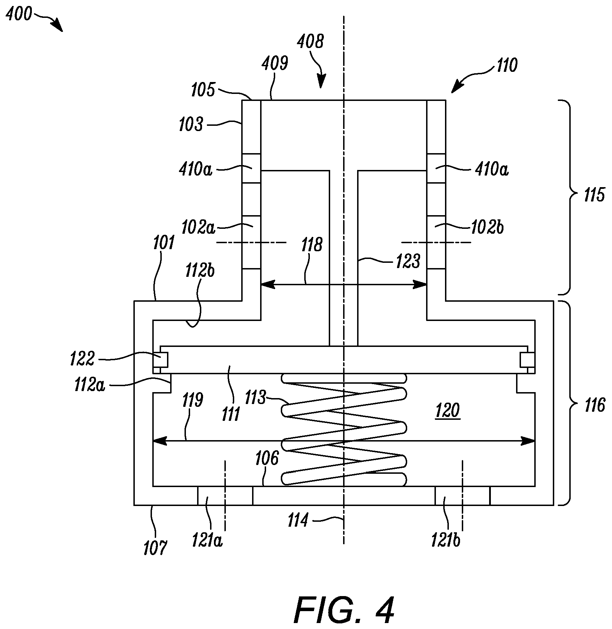

The piston 108 has a first end 109 adjacent the outlet 104 of the cylinder 101 that defines an outlet orifice 110 between the first end 109 of the piston 108 and the first end 105 of the cylinder 101. In the illustrated example the outlet orifice 110 is in the form of a circular gap between the first end 109 of the piston 108 and the first end 105 of the cylinder 101. The outlet orifice 110 may in alternative implementations be configured differently, such as in a 'pepper pot' form in which openings in the wall of the cylinder 101 and/or first end 109 of the piston 108 are opened and closed along with movement of the piston 108 within the cylinder 101, an example of which is described below in relation to Figure 4. Other configurations may for example include a slot that is covered and uncovered according to movement of the piston 108. Common to each of these implementations is that the orifice is at a minimum (non-zero) size when the piston 108 is against an end stop and increases as the pressure of the gas entering the cylinder 101 decreases. A minimum dimension of the orifice 110 may be around 1 mm when the orifice is at a minimum size.

A second opposing end 111 of the piston 108 is slidably mounted within the cylinder 101 between first and second end stops 112a, 112b. The first end stop 112a in the example of Figure 1 is provided by a protrusion on an inner face of the cylinder 101. The protrusion may for example be in the form of a flange extending radially inwards from the cylinder wall. The second end stop 112b is provided in this example by a radial transition between first and second portions 115, 116 of the cylinder 101. The first portion 115 of the cylinder 101 has a first internal diameter 118 and the second portion 116 of the cylinder 101 has a second internal diameter 119. The second internal diameter 119 is in this example larger than the first internal diameter 118, for example between two and three times larger. The difference in diameters will depend on the length of movement required of the piston 108 and the range of pressures the device 100 is designed for use with. The difference in diameters of the first and second portions 115, 116 allows the size of the outlet orifice 110 to be selected independently of the requirements for pressure differential across the second end 111 of the piston 108.

The piston 108 illustrated in Figure 1 has a first end 109 and second end 111 both in the form of circular plates, the first and second ends 109, 111 being connected by a smaller diameter connecting rod 123 extending along a central longitudinal axis 114 of both the piston 108 and the cylinder 101. The first end 109 has a smaller outer diameter than the second end 111. In this example, the outer diameter of the first end 109 is equal to an outer diameter of the first end 105 of the cylinder 101.

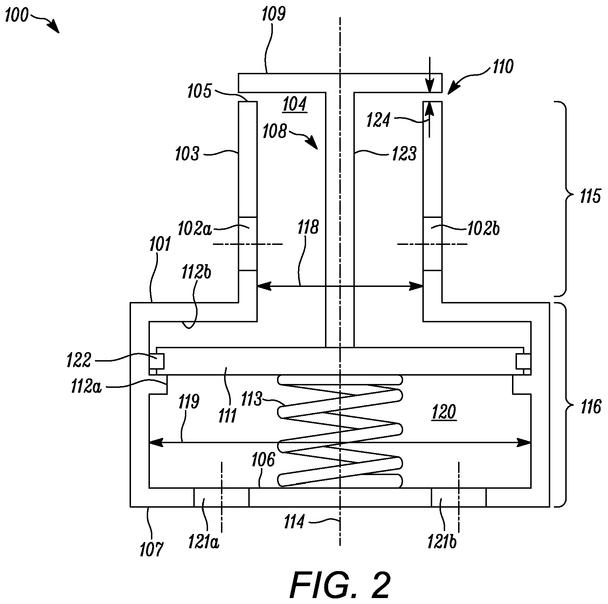

The spring 113 is mounted between the second end 111 of the piston 108 and the end wall 106 of the cylinder 101 and is arranged to bias the second end 111 of the piston 108 towards the second end stop 112b. A pressure differential across the second end 111 of the piston 108 can cause the piston 108 to move along the longitudinal axis 114 of the cylinder 101 such that the second end 111 moves towards the first end stop 112a, which compresses the spring 113 and causes the orifice 110 to become smaller. Figure 2 illustrates the device 100 with the second end 111 of the piston 108 forced against the first end stop 112a, resulting in a smaller outlet orifice 110. A circular outlet orifice 110 provides a wider but shorter flame compared to a plane orifice with a similar mass flow rate of gas.

In use, a chamber 120 in the second portion 116 of the cylinder 101 between the second end 111 of the piston 108 and the end wall 106 of the cylinder 101 is maintained at a reference pressure. The reference pressure may for example be atmospheric pressure, although a predetermined higher or lower pressure may alternatively be applied depending on the application. One or more ports 121a, 121b in the second end 107 of the cylinder 101 allow passage of gas into and out of the chamber 120, the ports 121a, 121b allowing the pressure within the chamber 120 to be maintained at the aforementioned reference pressure.

The second end 111 of the piston 108 is sealed against an inner surface of the cylinder 101 via a sealing ring 122 that extends around an outer edge of the second end 111 of the piston 108. The seal between the second end 111 of the piston 108 and the cylinder allows a pressure differential to be applied across the second end 111 to cause movement of the piston 108 against the biasing force of the spring 113 and the reference pressure in the chamber 120. The inner surface of the cylinder 101 and the outer edge of the second end 111 of the piston are both typically circular.

The outlet orifice 110 is larger when the second end 111 of the piston 108 is against the second end stop 112b (shown in Figure 1) compared to when the second end 111 of the piston 108 is against the first end stop 112a (shown in Figure 2). The position of the piston 108 in Figure 2 results from a pressure of gaseous fuel entering the cylinder 101 through the fuel inlets 102a, 102b being greater then the reference pressure in the chamber 120 by an amount that causes the spring 113 to compress. This restricts the flow of fuel through the outlet orifice 110. In an example implementation, a gap 124 between the first end 109 of the piston 108 and the first end 105 of the cylinder 101 may be around 1 mm in this position, which has been shown to be the minimum gap required to ensure that a flame will remain lit. In the fully opened position, i.e. when the second end 111 of the piston 108 is against the second end stop 112b, the gap 124 may for example be up to around 10 mm. When the pressure of the gas reduces such that the reference pressure and spring biasing force causes the second end 111 piston 108 to move towards the second end stop 112b, the flow of fuel is less restricted, allowing fuel to flow more freely while maintaining a flame. This prevents the flow of fuel from slowing down as the gas storage tank becomes depleted.

Along with the selection of the piston diameters 118, 119, stroke length and reference pressure, the spring rate of the spring 113 may be selected depending on safety considerations for each particular application, which can take into account for example how long a flame is tolerable and how quickly the storage tank should blowdown, i.e. become exhausted. In a particular implementation, the spring rate may be selected so as to allow a generally constant mass flow rate through the outlet orifice, which will have the effect of minimising tank blowdown time while not exceeding a pre-assessed maximum flame length.

When the device 100 is in its resting state, i.e. with no gas being provided to the inlets 102a, 102b, the outlet orifice 110 is opened to its maximum size through the biasing force of the spring 113 forcing the second end 111 of the piston 108 against the second end stop 112b. Ingress protection may be provided across the outlet orifice 110 to ensure that the device is not affected by the external environment. Protection may for example be provided by a frangible or removable cover extending across the outlet orifice, the cover being removed or destroyed by the passage of gas in the event of a blowdown of the gas storage tank.

An advantage of the pressure relief devices is that the size of the outlet orifice is automatically opened up in response to a lower gas pressure, which enables a connected storage tank to blowdown more quickly than with a fixed nozzle. A storage tank that is able to blowdown more quickly can therefore be made less strong and thereby made lighter and/or at reduced cost. A weight saving for the storage tank is particularly relevant for applications such as hydrogen-fuelled gas turbine engines for aircraft.

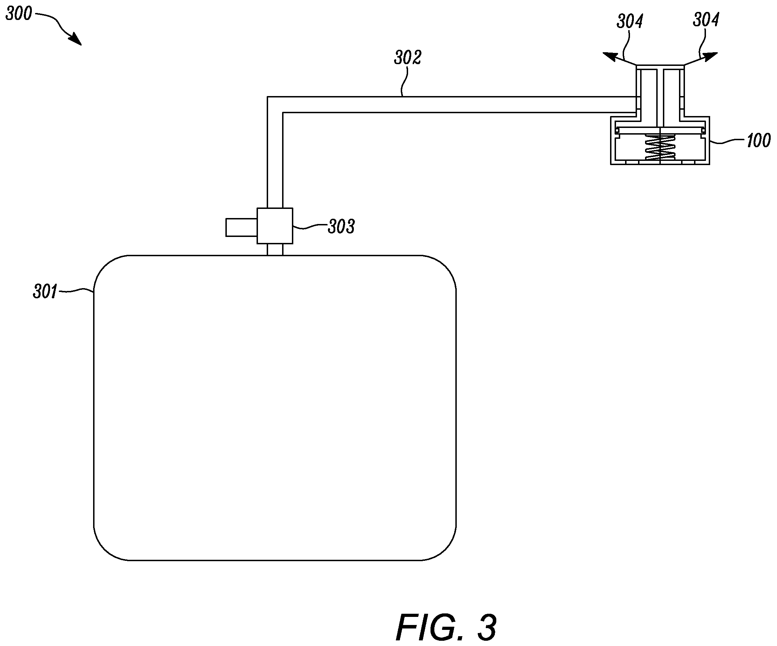

Figure 3 illustrates schematically an example fuel storage system 300 comprising a storage tank 301 and a pressure relief device 100 of the type described above connected to the storage tank 301 via a pressure relief line 302. The storage tank 301 may be configured to store hydrogen, which may for example be stored in liquid form at cryogenic temperatures. A TPRD 303 is provided in the pressure relief line 302, which opens up when a threshold temperature is exceeded, causing gas from the tank 301 to flow through the pressure relief line 302 to the pressure relief device 100. The gas exhausts from the pressure relief device 100 through the outlet orifice, in this example in the form of a circular flame extending from the device 100 in a direction indicated by arrows 304.

Figure 4 illustrates schematically an alternative example pressure relief device 400 in which the outlet orifice is instead in the form of one or more holes 410a, 410b extending through the wall 103 of the cylinder. The first end 409 of the piston 408 is slidably mounted in the first part 115 of the cylinder 101. Movement of the second end 111 of the piston 408 along the longitudinal axis 114 of the cylinder from the first end stop 112a to the second end stop 112b causes the first end 409 of the piston 408 to uncover the holes 401a, 401b to vary the size of the orifice. The holes 401a, 401b may be provided in a series or array around the cylinder 101. Other parts of the pressure relief device 400 may be similar to those described above in relation to Figures 1 and 2.

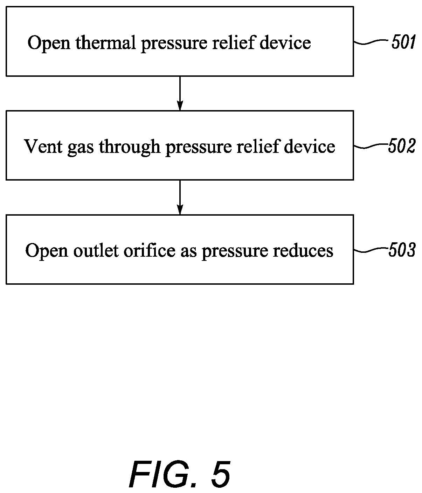

Figure 5 is a schematic flow diagram illustrating a method of exhausting fuel in a storage system of the type described above. The method starts at step 501 with the thermal pressure relief device opening when a predetermined temperature is exceeded. At step 502, the fuel begins to be exhausted from the storage tank as gas is vented through the pressure relief valve. Initially, the outlet orifice of the pressure relief valve is at a minimum size while the pressure of gas in the pressure relief line remains high. As the pressure reduces, the size of the outlet orifice reduces at step 503 until the storage tank is completely exhausted.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A pressure relief device (100, 400) for a gaseous fuel, the device (100) comprising:
a cylinder (101) having a fuel inlet (102a, 102b) in a wall (103) of the cylinder (101), an outlet (104) at an open first end (105) of the cylinder (101) and an end wall (106) at a closed opposing second end (107) of the cylinder (101);
a piston (108, 408) disposed within the cylinder (101), the piston (108, 408) having a first end (109, 409) adjacent the outlet (104) of the cylinder (101) defining an outlet orifice (110, 410a, 410b) and a second opposing end (111) slidably mounted within the cylinder (101) between first and second end stops (112a, 112b); and
a spring (113) mounted between the second end (111) of the piston (108, 408) and the end wall (106) of the cylinder (101), the spring (113) arranged to bias the second end (111) of the piston (108, 408) towards the second end stop (112b),
wherein movement of the piston (108, 408) along a longitudinal axis (114) of the cylinder (101) between the first and second end stops (112a, 112b) varies a size of the outlet orifice (110, 410a, 410b) to thereby vary a flow of gaseous fuel between the fuel inlet (102a, 102b) and the outlet orifice (110, 410a, 410b).

2. The pressure relief device (100) of claim 1, wherein the outlet orifice (110) is in the form of a circular gap between the first end (109) of the piston and the first end (105) of the cylinder (101).

3. The pressure relief device (400) of claim 1, wherein the outlet orifice is in the form of one or more holes (410a, 410b) through the wall (103) of the cylinder (101), the first end (409) of the piston (408) being slidably mounted within the cylinder (101) such that movement of the second end (111) of the piston (108) along the longitudinal axis (114) of the cylinder (101) from the first to second end stops (112a, 112b) uncovers the one or more holes (410a, 410b) to vary the size of the outlet orifice.

4. The pressure relief device (100, 400) of any one of claims 1 to 3, wherein the outlet orifice (110, 410a, 410b) is larger when the second end (111) of the piston (108, 408) is against the second end stop (112b) compared to when the second end (111) of the piston (108, 408) is against the first end stop (112a).

5. The pressure relief device (100, 400) of any preceding claim, wherein the first end stop (112a) is provided by a protrusion on an inner face of the cylinder (101).

6. The pressure relief device (100, 400) of any preceding claim, wherein the cylinder (110) comprises a first portion (115) having a first internal diameter (118) and a second portion (116) having a second internal diameter (119) larger than the first internal diameter (118), the second end (111) of the piston (108, 408) being disposed within the second portion (116) of the cylinder (101).

7. The pressure relief device (100, 400) of claim 6, wherein the second internal diameter (119) is between around 2 and 3 times the first internal diameter (118).

8. The pressure relief device (100, 400) of claim 6 or claim 7, wherein the second end stop (112b) is provided by a radial transition between the first and second portions (115, 116) of the cylinder (101).

9. The pressure relief device (100, 400) of any preceding claim, comprising a sealing ring (122) extending around an outer edge of the second end (111) of the piston (108, 408) between the outer edge of the second end (111) of the piston (108) and an inner surface of the cylinder (101).

10. The pressure relief device (100, 400) of any preceding claim, wherein the second end (107) of the cylinder (101) comprises one or more ports (121a, 121b) extending through the second end (107).

11. A fuel storage system comprising:
a storage tank (301);
a pressure relief device (100, 400) according to any preceding claim, wherein the fuel inlet (102a, 102b) is connected to the storage tank (301) by a pressure relief line (302); and
a thermal pressure relief device (303) in the pressure relief line (302) between the pressure relief device (100, 400) and the storage tank (301) and configured to open when a predetermined temperature threshold is exceeded.

12. The fuel storage system of claim 11, wherein the storage tank (301) is configured to store hydrogen.

13. A method of exhausting fuel in a fuel storage system (300) according to claim 11, the method comprising:
opening the thermal pressure relief device (303) when the predetermined temperature threshold is exceeded; and
exhausting the fuel from the storage tank (301) as gas through the pressure relief valve (100),
wherein the outlet orifice (110) of the pressure relief valve (100) increases in size as a pressure of the gas in the pressure relief line (302) reduces as the fuel is exhausted from the storage tank (301).

14. The method of claim 13, wherein the fuel in the storage tank (301) is hydrogen.
